# FASCICULE DE BREVET EUROPEEN

(11) **EP 3 729 035 B1**
(45) Date de publication et mention de la délivrance du brevet: **10.05.2023**
(21) Numéro de dépôt: 18829249.4
(22) Date de dépôt: 12.12.2018
(51) Int. Cl.: G01L 1/26, B23B 27/14, B25J 9/16, G01L 5/16

(54) **PORTE-PLAQUETTE POURVUE D'UN MODULE DE MESURE D'EFFORTS**
WERKZEUGHALTER MIT EINEM KRAFTMESSMODUL
TOOL-HOLDER EQUIPPED WITH A FORCE MEASUREMENT MODULE

(30) Priorité: 19.12.2017 FR 1762556
(43) Date de publication de la demande: 28.10.2020
(73) Titulaire: Centre Technique des Industries Mécaniques, 60300 Senlis (FR)
(72) Inventeur: BUSI, Roger, 74960 Annecy Meythet (FR); LAURENT, Patrice, 74250 Viuz en Sallaz (FR)
(74) Mandataire: Fédit-Loriot
(86) Numéro de dépôt international: PCT/EP2018/084458
(87) Numéro de publication internationale: WO 2019/121189

(56) Documents cités:
- EP-A1- 2 978 565
- EP-A2- 1 460 399
- WO-A1-2005/036117
- US-A- 4 546 838
- US-A- 5 220 971
- US-A1- 2006 037 409
- GRUENBAUM P ET AL: "TRIAXIALE MESSUNG DER SCHNEIDKRAEFTE AN DEN ZAEHNEN EINES SCHAUFELRADBAGGERS", MESSEN UND PRUFEN, IVA INTERNATIONAL, MUNCHEN, DE, vol. 26, no. 4, 1 avril 1990 (1990-04-01), pages 175-180, XP000170907, ISSN: 0937-3446

## Description

La présente invention concerne un module de mesure d'efforts réalisé dans un porte-plaquette.

Afin d'optimiser les conditions d'utilisation des outils, on cherche à mesurer les efforts qui sont exercés sur ces outils.

Il existe des platines de mesure d'effort utilisant des capteurs piézoélectriques sensibles aux déformations. Ces capteurs permettent de mesurer des efforts suivant trois directions de l'espace avec une précision satisfaisante, même pour des opérations nécessitant de faibles efforts. Toutefois, ces capteurs peuvent être très onéreux et leur installation impossible dans certains cas.

Le document EP2978565B1 du nom de la Demanderesse propose un porte-plaquette instrumenté. Deux cavités de mesure sont ménagées dans le corps de porte-plaquette. Des jauges de contrainte sont agencées dans ces cavités pour en mesurer la déformation en cisaillement afin d'évaluer l'effort de coupe exercé sur le porte-plaquette. Les jauges de contrainte sont alors agencées près de la fibre neutre du porte-plaquette et peuvent être câblées en pont de Wheatstone pour une bonne sensibilité et pour limiter l'influence d'autres sources de déformation du porte-plaquette notamment liées aux efforts d'avance, de torsion et de pénétration. Il est également possible d'utiliser des deuxièmes jauges de contrainte collées sur les parois latérales des cavités de mesure pour mesurer une deuxième composante de l'effort, tel que l'effort d'avance. Il est en outre possible de prévoir des cavités de mesure supplémentaires décalées longitudinalement des premières et pourvues de troisièmes jauges de contrainte pour mesurer une troisième composante de l'effort, tel que l'effort de pénétration.

On constate toutefois que lorsque l'utilisateur souhaite mesurer plus d'une composante de l'effort exercé sur l'outil, des interactions non négligeables ne pouvant pas toujours être corrigées par un câblage spécifique ou par calcul, peuvent subsister entre les différentes composantes des efforts et compliquer, voire empêcher, la réalisation de mesures dans deux ou trois directions de l'espace.

Un but de la présente invention est donc de proposer un module de mesure d'efforts amélioré ne présentant pas les inconvénients précités.

A cet effet, l'invention a pour objet un porte-plaquette selon la revendication 1.

L'âme centrale, centrée sur la fibre neutre, amincit localement le corps de mesure, ce qui permet de rapprocher les jauges de contraintes de la fibre neutre du corps de mesure pour obtenir une bonne sensibilité des mesures. L'âme centrale conformée pour découpler les déformations du corps de mesure autour des jauges de contraintes, au moins entre la troisième direction et la première direction permet de mesurer les composantes des efforts indépendamment les unes des autres dans ces directions en limitant leurs interactions mutuelles.

Selon un premier exemple de réalisation, l'âme centrale présente une forme de « I », la poutre du « I » étant orientée dans la deuxième direction du corps de mesure. Pour cela, deux trous de découplage traversent le corps de mesure pour délimiter également l'âme centrale. Ces deux trous traversant présentent une forme allongée, telle qu'oblongue, s'étendant dans la deuxième direction du corps de mesure.

Selon un deuxième exemple de réalisation, l'âme centrale présente une forme en « T », le pied du « T » étant orienté dans la deuxième direction du corps de mesure. Pour cela, deux premiers trous de découplage traversant présentant une forme allongée s'étendant dans la deuxième direction et un troisième trou de découplage traversant présentant une forme allongée s'étendant dans la troisième direction sont ménagés dans le corps de mesure pour délimiter également l'âme centrale. On réduit ainsi la longueur « découplée » de l'âme dans la deuxième direction par rapport à l'exemple précédent, ce qui permet d'augmenter la raideur du module de mesure d'efforts dans la troisième direction.

Le module de mesure d'efforts peut en outre comporter au moins une troisième jauge de contrainte fixée sur l'âme centrale et configurée pour mesurer une déformation en élongation-compression dans la deuxième direction. Le module de mesure d'efforts comporte par exemple au moins une troisième jauge de contrainte fixée de chaque côté de l'âme centrale, les troisièmes jauges de contraintes étant superposées de part et d'autre de l'âme centrale et câblées en quart de pont de Wheatstone.

Selon un troisième exemple de réalisation, deux trous de découplage borgnes agencés symétriquement dos à dos par rapport à un plan de symétrie perpendiculaire au plan de symétrie des deux cavités agencées dos à dos, délimitent également l'âme centrale. Les deux trous de découplage borgnes sont agencés de manière symétrique et centrée par rapport à la fibre neutre du corps de mesure.

Les trous de découplage présentent par exemple une forme allongée, telle qu'oblongue, s'étendant dans la deuxième direction du corps de mesure.

Le module de mesure d'efforts peut comporter en outre au moins une troisième jauge de contrainte fixée sur un fond plat d'un trou de découplage et configurée pour mesurer une déformation en élongation-compression. Le module de mesure d'efforts comporte par exemple une troisième jauge de contrainte dans chacun des deux trous de découplage.

Un autre objet de la présente invention est un module de mesure d'efforts comportant :
- un corps de mesure comprenant une âme centrale délimitée par deux cavités séparant l'âme centrale de part et d'autre de l'âme centrale, les cavités s'inscrivant dans une forme parallélépipédique définissant une première, deuxième et troisième directions perpendiculaires entre elles, le corps de mesure présentant une forme allongée dans la deuxième direction,
- au moins une première jauge de contrainte fixée sur un côté de l'âme centrale et configurée pour mesurer une déformation en cisaillement dans la troisième direction,
- au moins une deuxième jauge de contrainte fixée sur une paroi latérale d'une des cavités et configurée pour mesurer une déformation en élongation-compression ou cisaillement dans la première direction,
caractérisé en ce que l'âme centrale présente une forme de « I », la poutre du « I » étant orientée dans la deuxième direction du corps de mesure, deux trous de découplage traversant le corps de mesure délimitant également l'âme centrale.

Un autre objet de la présente demande de brevet est un module de mesure d'efforts comportant :
- un corps de mesure comprenant une âme centrale délimitée par deux cavités séparant l'âme centrale de part et d'autre de l'âme centrale, les cavités s'inscrivant dans une forme parallélépipédique définissant une première, deuxième et troisième directions perpendiculaires entre elles, le corps de mesure présentant une forme allongée dans la deuxième direction,
- au moins une première jauge de contrainte fixée sur un côté de l'âme centrale et configurée pour mesurer une déformation en cisaillement dans la troisième direction,
- au moins une deuxième jauge de contrainte fixée sur une paroi latérale d'une des cavités et configurée pour mesurer une déformation en élongation-compression ou cisaillement dans la première direction,
caractérisé en ce que l'âme centrale présente une forme en « T », le pied du « T » étant orienté dans la deuxième direction du corps de mesure, deux premiers trous de découplage traversant présentant une forme allongée s'étendant dans la deuxième direction et un troisième trou de découplage traversant présentant une forme allongée s'étendant dans la troisième direction étant ménagés dans le corps de mesure pour délimiter également l'âme centrale.

Un autre objet de la présente demande de brevet est un module de mesure d'efforts comportant :
- un corps de mesure comprenant une âme centrale délimitée par deux cavités séparant l'âme centrale de part et d'autre, les cavités s'inscrivant dans une forme parallélépipédique définissant une première, deuxième et troisième directions perpendiculaires entre elles, le corps de mesure présentant une forme allongée dans la deuxième direction,
- au moins une première jauge de contrainte fixée sur un côté de l'âme centrale et configurée pour mesurer une déformation en cisaillement dans la troisième direction,
- au moins une deuxième jauge de contrainte fixée sur une paroi latérale d'une des cavités et configurée pour mesurer une déformation en élongation-compression ou cisaillement dans la première direction,
caractérisé en ce que deux trous de découplage borgnes agencés symétriquement dos à dos par rapport à un plan de symétrie perpendiculaire au plan de symétrie des deux cavités agencées dos à dos, délimitent également l'âme centrale.

Le module de mesure d'efforts des objets de la présente invention peut en outre comporter une ou plusieurs caractéristiques décrites ci-après, prises seules ou en combinaison.

Le corps de mesure peut présenter une forme allongée s'inscrivant dans une forme générale parallélépipédique rectangle ou autre forme prismatique ou forme cylindrique ou tronconique.

On prévoit par exemple que l'épaisseur de l'âme centrale soit comprise entre 5 et 20mm. Le corps de mesure est ainsi suffisamment évidé pour loger des jauges de contraintes sans être trop affaibli, ce qui permet d'éviter d'engendrer des phénomènes vibratoires pour certaines conditions de coupe.

On peut en outre prévoir que le corps de mesure du module de mesure d'efforts soit agencé à une distance longitudinale inférieure à 60mm de l'extrémité de l'outil, telle qu'à une distance inférieure ou égale à 50mm.

Le module de mesure d'efforts peut comporter une première jauge de contrainte fixée de chaque côté de l'âme centrale, les jauges de contraintes étant superposées de part et d'autre de l'âme centrale et câblées en pont complet de Wheatstone. Les premières jauges de contrainte sont par exemple des jauges doubles dites « chevron » ou « sapin ».

L'invention a aussi pour objet un porte-plaquette pour machine-outil comprenant :
- un barreau de maintien configuré pour être monté dans un moyen de déplacement d'outil,
- une tête prolongeant le barreau de maintien, configurée pour porter un outil, tel qu'une plaquette de coupe,
caractérisé en ce qu'il comporte en outre un module de mesure d'efforts tel que décrit précédemment dont le corps de mesure est réalisé dans le barreau de maintien.

L'invention a encore pour objet une extrémité de bras de robot configurée pour porter un outil et pour être déplacée par un moyen de déplacement d'outil caractérisé en ce qu'il comporte en outre un module de mesure d'efforts tel que décrit précédemment, dont le corps de mesure est réalisé dans un corps de l'extrémité de bras de robot.

D'autres objets, avantages et caractéristiques apparaîtront à la lecture de la description de l'invention, ainsi que des dessins annexés sur lesquels :
Figure 1 montre une vue schématique d'un porte-plaquette pourvu d'un module de mesure d'efforts selon un premier exemple de réalisation.
Figure 2 montre une vue schématique en coupe A-A d'un corps de mesure du porte-plaquette de la Figure 1.
Figure 3 montre une vue partielle en perspective du porte-plaquette de la Figure 1.
Figure 4 montre un exemple de câblage des premières jauges de contrainte.
Figure 5 montre une vue partielle en perspective d'un porte-plaquette pourvu d'un module de mesure d'efforts selon un deuxième exemple de réalisation.
Figure 6 montre une vue en perspective d'un porte-plaquette pourvu d'un module de mesure d'efforts selon un troisième exemple de réalisation.
Figure 7 montre une vue de côté du porte-plaquette de la Figure 6 avec des éléments représentés en transparence.
Figure 8 montre une vue en coupe transversale du corps de mesure du porte-plaquette de la Figure 6.
Figure 9 montre un exemple de câblage des troisièmes jauges de contrainte du module de mesure d'efforts de la Figure 8.
Figure 10 montre une vue en perspective d'une variante de porte-plaquette pourvu d'un module de mesure d'efforts selon le troisième exemple de réalisation.
Figure 11 montre une vue schématique en coupe A-A du module de mesure d'efforts de la Figure 10.
Figure 12 montre une vue schématique en perspective d'une extrémité de bras de robot pourvu d'un module de mesure d'efforts selon le troisième exemple de réalisation.
Figure 13 montre une vue schématique en perspective d'une variante de l'extrémité du bras de robot de la Figure 12.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Le module de mesure d'efforts 1 comporte un corps de mesure 2.

Le corps de mesure 2 peut être configuré pour être interposé entre un outil et un moyen de déplacement d'outil 4. L'outil peut être de tout type, c'est par exemple une plaquette de coupe 3 ou comme on le verra plus loin, une pince, un pinceau, un outil de découpe laser, un outil de nettoyage, un foret, un filet de vis ...

Le corps de mesure 2 comporte une âme centrale 10 délimitée par deux cavités 8, 9 séparant l'âme centrale 10 de part et d'autre de l'âme centrale 10, les cavités 8, 9 s'inscrivant dans une forme parallélépipédique définissant une première, deuxième et troisième direction perpendiculaires X, Y, Z entre elles. Les cavités 8, 9 sont ainsi agencées symétriquement dos à dos selon un plan de symétrie défini par la deuxième et la troisième direction Y, Z. Elles sont centrées sur la fibre neutre.

Le corps de mesure 2 présente une forme allongée dans la deuxième direction Y. Il s'inscrit par exemple dans une forme générale parallélépipédique rectangle ou autre forme prismatique ou dans une forme cylindrique ou tronconique.

Dans le cas d'une forme générale parallélépipédique, les arêtes du pavé sont parallèles aux trois directions X, Y, Z des cavités 8, 9. Dans le cas d'une forme cylindrique ou tronconique, l'axe du cylindre ou du cône définit la deuxième direction Y, perpendiculaire aux première et troisième directions X et Z qui sont alors « radiales ».

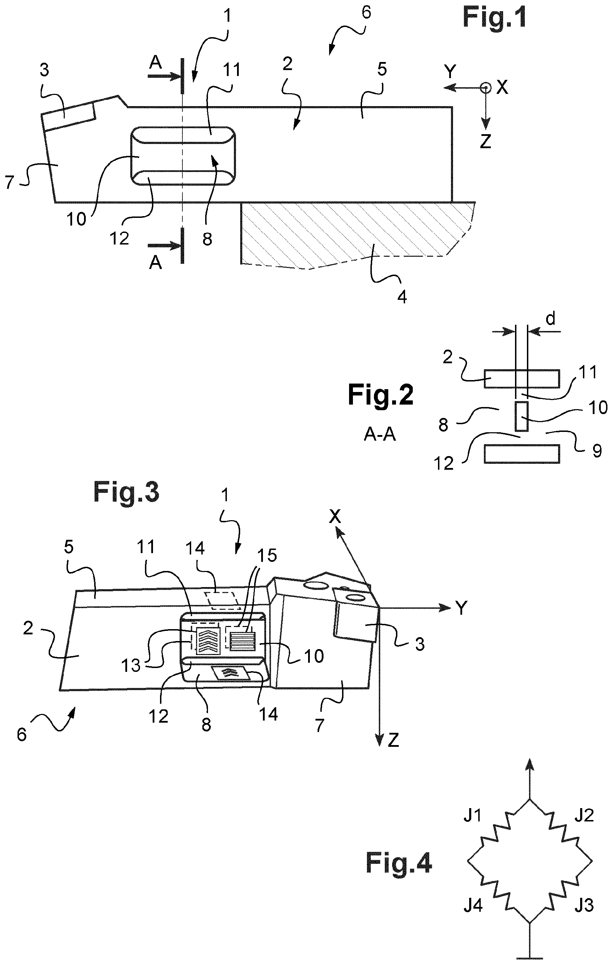

La Figure 1 montre un premier exemple de réalisation d'un module de mesure d'efforts 1. Dans cet exemple, le module de mesure d'efforts 1 est réalisé dans un porte-plaquette 6 pour machine-outil, notamment de tournage et plus particulièrement de chariotage-contournage. L'outil 3 est ici une plaquette de coupe, permettant l'usinage d'une pièce.

Le porte-plaquette 6 comporte un barreau de maintien 5 et une tête 7 prolongeant le barreau de maintien 5. La tête 7 est configurée pour porter l'outil 3 sur un côté de la tête 7.

Le barreau de maintien 5 est configuré pour être déplacé par un moyen de déplacement d'outil 4 formé ici par un porte-outil de la machine-outil. Le barreau de maintien 5 présente par exemple une forme générale parallélépipédique rectangle, telle que de section transversale de 16x16mm ou 20x20mm ou 25x25mm ou 25x20mm ou 32x32mm.

Le corps de mesure 2 du module de mesure d'efforts 1 est réalisé dans le barreau de maintien 5. Il est par exemple intégré dans le barreau de maintien 5.

On prévoit par exemple que le corps de mesure 2 soit agencé à une distance longitudinale (c'est-à-dire dans la deuxième direction Y) de l'extrémité de l'outil 3 inférieure à 60mm, telle qu'inférieure ou égale à 50mm.

La profondeur des cavités 8, 9 est par exemple inférieure ou égale à 8mm et supérieure ou égale à 4mm. L'ouverture des cavités 8, 9 est par exemple formée par un rectangle inférieur à 15x20mm.

Selon un premier exemple de réalisation, l'âme centrale 10 présente une forme de « I », la poutre du « I » étant orientée dans la deuxième direction Y du corps de mesure 2.

Pour cela par exemple, deux trous de découplage 11, 12 traversent le corps de mesure 2 pour également délimiter l'âme centrale 10. Ces deux trous traversant 11, 12 présentent une forme allongée, telle qu'oblongue, s'étendant dans la deuxième direction Y du corps de mesure 2. Ces trous de découplage 11, 12 forment des lumières mettant en communication les deux cavités 8, 9 (Figures 2 et 3). Les trous de découplage 11, 12 s'étendent par exemple sur toute la longueur des cavités 8, 9.

L'épaisseur d de l'âme centrale 10 est par exemple comprise entre 5 et 20mm.

Comme on peut le voir sur la Figure 3, le module de mesure d'efforts 1 comporte en outre au moins une première jauge de contrainte 13 fixée sur un côté de l'âme centrale 10 et configurée pour mesurer une déformation en cisaillement dans la troisième direction Z.

On utilise par exemple des premières jauges de contrainte 13 doubles dites « chevron » ou « sapin ». Une jauge sapin comporte deux jauges de contrainte dont les directions longitudinales respectives sont concourantes « en V » en définissant un angle par exemple compris entre 80 et 100°, comme par exemple un angle de 90°.

Par exemple, les premières jauges de contrainte 13 « sapin » présentent un axe de symétrie du sapin s'étendant dans la troisième direction Z. La déformation en cisaillement de l'âme centrale 10 donne accès à la composante de l'effort selon la troisième direction Z correspondant à un effort de coupe.

Le module de mesure d'efforts 1 peut comporter une première jauge de contrainte 13 fixée de chaque côté de l'âme centrale 10, les jauges de contraintes 13 étant superposées de part et d'autre de l'âme centrale 10 et câblées en pont complet de Wheatstone. Chaque jauge de chaque jauge double peut être câblée sur une branche distincte d'un pont de Wheatstone de manière à câbler les deux premières jauges de contrainte 13 en pont complet de Wheatstone comme on peut le voir sur la Figure 4 où J1 et J3 désignent les jauges de la première jauge de contrainte 13 double disposée sur un côté de l'âme centrale 10 et où J2 et J4 désignent les jauges de la première jauge de contrainte 13 disposée de l'autre côté.

Le module de mesure d'efforts 1 comporte en outre au moins une deuxième jauge de contrainte 14 fixée sur une paroi latérale d'une des cavités 8, 9 et configurée pour mesurer une déformation en élongation-compression ou cisaillement dans la première direction X.

Le module de mesure d'efforts 1 comporte par exemple deux deuxièmes jauges de contrainte 14 dans chaque cavité 8, 9 ou une première deuxième jauge de contrainte 14 traversant le premier trou de découplage 11 et de même, une seconde deuxième jauge de contrainte 14 traversant le second trou de découplage 12.

Les parois latérales portant les deuxièmes jauges de contrainte 14 sont en regard l'une de l'autre par rapport à un plan défini par la première et la deuxième direction X, Y. On peut dire que les parois latérales des cavités 8, 9 sont « horizontales » en référence à une troisième direction Z « verticale ».

Par exemple, les deuxièmes jauges de contrainte 14 « sapin » des parois latérales présentent un axe de symétrie du sapin s'étendant dans la première direction X. La déformation en cisaillement de la paroi latérale donne accès à la composante de l'effort dans la première direction X correspondant à un effort d'avance.

Selon un autre exemple de réalisation, les au moins deux deuxièmes jauges de contrainte 14 fixées sur les parois latérales opposées d'au moins une cavité 8, 9 sont configurées pour mesurer une déformation en élongation-compression.

Les deuxièmes jauges de contrainte 14 peuvent également être câbles en pont complet de Wheatstone.

Le module de mesure d'efforts 1 peut en outre comporter au moins une troisième jauge de contrainte 15 fixée sur l'âme centrale 10 et configurée pour mesurer une déformation en élongation-compression dans la deuxième direction Y. Il comporte par exemple une troisième jauge de contrainte 15 fixée de chaque côté de l'âme centrale 10, superposées de part et d'autre de l'âme centrale 10 et câblées en quart de pont de Wheatstone. La déformation en élongation-compression de l'âme centrale 10 donne accès à la composante de l'effort selon la deuxième direction Y correspondant ici à un effort de pénétration.

L'âme centrale 10, centrée sur la fibre neutre, amincit localement le corps de mesure 2, ce qui permet de rapprocher les jauges de contraintes 13, 14, 15, de la fibre neutre du corps de mesure 2 pour obtenir une bonne sensibilité des mesures. L'âme centrale 10 conformée pour découpler les déformations du corps de mesure 2 autour des jauges de contraintes 13, 14, 15, au moins entre la troisième direction Z et la première direction X permet de mesurer les composantes des efforts indépendamment les unes des autres dans ces directions en limitant leurs interactions mutuelles. La mesure de l'effort dans la troisième direction Z correspondant ici à l'effort de coupe est la mesure la plus précise. La mesure de l'effort dans la deuxième direction Y correspondant ici à l'effort de pénétration est la moins précise.

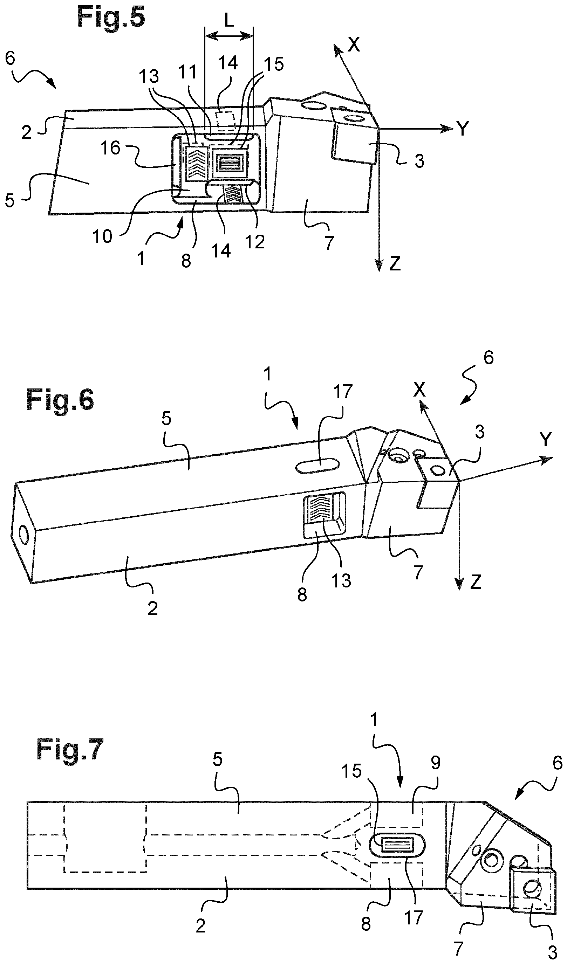

Un conduit interne raccordé aux cavités 8, 9 peut être ménagé dans le corps de mesure 2 pour le passage des fils de connexion des jauges de contrainte 13, 14, 15 (Figure 7). Le module de mesure d'efforts 1 peut en outre comporter des plaques de fermeture pour fermer de manière étanche les cavités 8, 9 afin de protéger les jauges de contraintes des projections d'huile ou copeaux.

La Figure 5 illustre un deuxième exemple de réalisation du module de mesure d'efforts 1, également réalisé dans un porte-plaquette 6 pour machine-outil.

Cet exemple se différencie du précédent par le fait qu'un troisième trou de découplage 16 traversant présentant une forme allongée et s'étendant dans la troisième direction Z, délimite également l'âme centrale 10 du corps de mesure 2. Les deux trous de découplage 11, 12 ne s'étendent pas ici sur toute la longueur des cavités 8, 9 parallélépipédiques. L'âme centrale 10 présente ainsi une forme en « T », le pied du « T » étant orienté dans la deuxième direction Y du corps de mesure 2.

La première jauge de contrainte 13 en cisaillement peut être placée à proximité du troisième trou de découplage 16 dans le chapeau du « T » tandis que la troisième jauge de contrainte 15 en élongation-compression peut être placée dans le pied du « T ».

On réduit ainsi la longueur L « découplée » de l'âme centrale 10 dans la deuxième direction Y par rapport à l'exemple précédent, ce qui permet d'augmenter la raideur du module de mesure d'efforts 1 dans la troisième direction Z correspondant ici à la composante de l'effort de coupe.

Les Figures 6, 7 et 8 illustrent un troisième exemple de réalisation du module de mesure d'efforts 1 également formé ici dans un porte-plaquette 6 pour machine-outil.

Dans cet exemple, deux trous de découplage 17, 18 borgnes agencés symétriquement dos à dos par rapport à un plan de symétrie défini par la première direction et la deuxième direction X, Y perpendiculaire au plan de symétrie (Z, Y) des deux cavités 8, 9 agencées dos à dos, délimitent également l'âme centrale 10. Les trous de découplage 17, 18 borgnes présentent par exemple une forme allongée, telle qu'oblongue, s'étendant dans la deuxième direction Y du corps de mesure 2. Ils sont par exemple de même longueur que les cavités 8, 9 mais présentent une largeur plus étroite, telle que inférieure à 7mm. La profondeur des trous de découplage 17, 18 est par exemple inférieure à 8mm, et supérieure ou égale à 5mm.

L'épaisseur d de l'âme centrale 10 est également par exemple comprise entre 5 et 20mm.

Comme dans les exemples précédents, le module de mesure d'efforts 1 comporte au moins une première jauge de contrainte 13 fixée sur un côté de l'âme centrale 10 et configurée pour mesurer une déformation en cisaillement dans la troisième direction Z. Il y a par exemple une première jauge de contrainte 13 fixée de chaque côté de l'âme centrale 10, les jauges de contrainte 13 étant superposées de part et d'autre de l'âme centrale 10 et câblées en pont complet de Wheatstone (Figure 4).

Comme dans les exemples précédents, le module de mesure d'efforts 1 comporte au moins une deuxième jauge de contrainte 14 fixée sur une paroi latérale d'une des cavités 8, configurée pour mesurer une déformation en élongation-compression ou cisaillement dans la première direction X. Le module de mesure d'efforts 1 comporte par exemple deux deuxièmes jauges de contrainte 14 agencées sur des parois latérales (X, Y) opposées dans chaque cavité 8, 9.

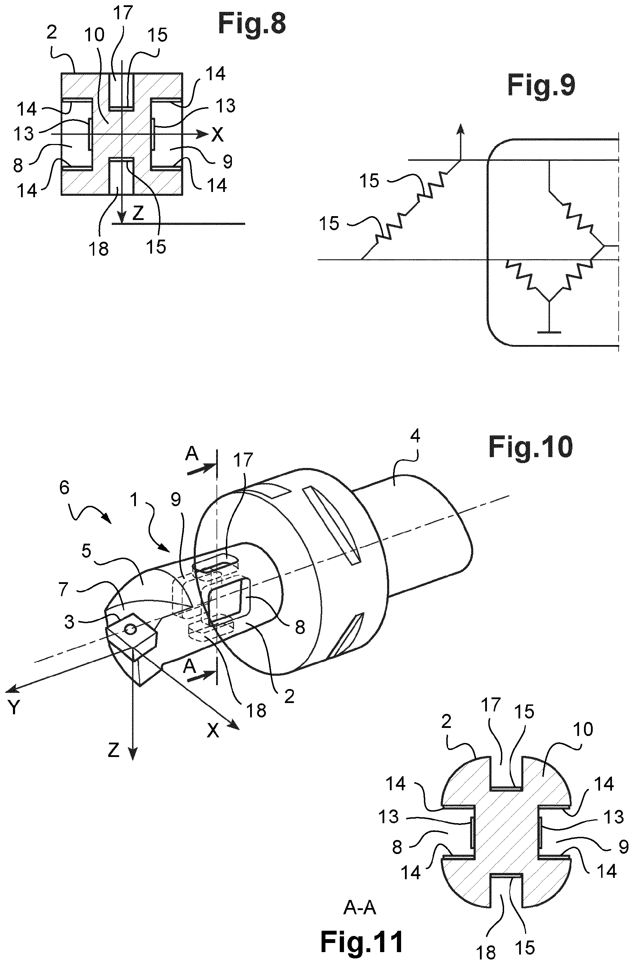

Le module de mesure d'efforts 1 peut comporter en outre au moins une troisième jauge de contrainte 15 fixée sur un fond plat d'un trou de découplage 17, 18 et configurée pour mesurer une déformation en élongation-compression. Le module de mesure d'efforts comporte par exemple une troisième jauge de contrainte 15 dans chacun des deux trous de découplage 17, 18. Les troisièmes jauges de contrainte 15 sont par exemple câblées en quart de pont de Wheatstone (Figure 9). Les résistances des troisièmes jauges de contraintes 15 des deux trous de découplage 17, 18 sont par exemple câblées en série sur une branche du pont de Wheatstone.

Les trous de découplage 17, 18 borgnes permettent de découpler les efforts exercés sur l'outil 3 dans les trois directions X, Y, Z et donc permettent de mesurer plus facilement les composantes des efforts indépendamment l'une de l'autre dans ces trois directions en limitant leurs interactions mutuelles. En outre, on conserve un moment d'inertie maximal dans la première direction X, ce qui améliore la tenue aux efforts de coupe.

Ces modules de mesure d'efforts 1 peuvent être agencés dans un porte-plaquette 6 parallélépipédique comme visible sur les Figures 1 à 8 mais aussi dans un barreau de maintien 5 présentant toute forme allongée, comme par exemple une forme générale tronconique (Figures 10 et 11), le barreau de maintien 5 étant par exemple monté dans une tourelle du moyen de déplacement d'outil 4 par un montage quart de tour. Le corps de mesure 2 représenté ici s'inscrit dans une forme générale cylindrique ou tronconique (Figure 11).

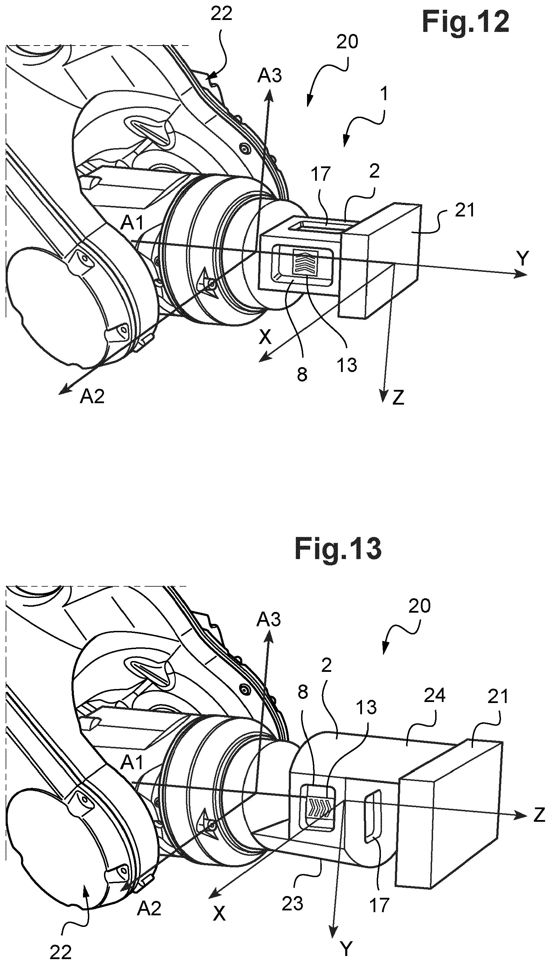

Les Figures 12 et 13 illustrent une autre application pour laquelle le corps de maintien 2 du module de mesure d'efforts 1 est réalisé dans un corps d'une extrémité de bras de robot 20 industriel.

L'extrémité de bras de robot 20 est par exemple configurée pour porter un outil 21 (dont on a seulement représenté schématiquement une interface mécanique sur les Figures 12 et 13). L'outil 21 peut être de tout type, c'est par exemple une pince, un pinceau, un outil de découpe laser, un outil de nettoyage, un foret, un filet de vis ...

L'extrémité de bras de robot 20 est également configurée pour être déplacée par un moyen de déplacement d'outil 22, formé ici par un bras de robot notamment configuré pour tourner autour d'un axe de rotation A1 et pour pivoter l'axe de rotation A1 autour d'un axe de pivotement A2 perpendiculaire à l'axe de rotation A1.

Sur l'exemple illustré, le module de mesure d'efforts 1 est celui présentant deux trous de découplage 17, 18 borgnes agencés symétriquement dos à dos par rapport à un plan de symétrie X, Y perpendiculaire au plan de symétrie Z, Y des deux cavités 8, 9 agencés dos à dos. Il est également possible de former un module de mesure d'efforts 1 selon d'autres modes de réalisation, tels que ceux décrits plus haut, dans le corps de l'extrémité de bras de robot 20.

Dans l'exemple illustré sur la Figure 12, le module de mesure d'efforts 1 est agencé dans l'extrémité de bras de robot 20 de sorte que la deuxième direction Y dans laquelle s'étendent le corps de mesure 2 et les trous de découplage 17, 18 soit confondue avec l'axe de rotation A1 du bras de robot. La mesure de l'effort dans la troisième direction Z est ainsi la mesure la plus précise.

Pour obtenir une mesure plus précise dans la direction de l'axe de rotation A1 du bras de robot par exemple, une solution est de pivoter le module de mesure d'efforts 1 de 90° de sorte que la troisième direction Z du corps de mesure 2 du module de mesure d'efforts 1 coïncide avec la direction de l'axe de rotation A1 (Figure 13).

Le corps de mesure 2 du module 1 s'étend alors par exemple par deux poutrelles de raccordement 23, 24, une première poutrelle 23 étant raccordée au moyen de déplacement d'outil 22 et une deuxième poutrelle 24 étant raccordée à l'outil 21. Les poutrelles 23, 24 permettent de libérer les ouvertures des trous de découplage 17, 18 borgnes du troisième exemple de réalisation du module de mesure d'efforts 1.

## Revendications

1. Porte-plaquette (6) pour machine-outil comprenant :
- un barreau de maintien (5) configuré pour être monté dans un moyen de déplacement d'outil (4),
- une tête (7) prolongeant le barreau de maintien (5), configurée pour porter une plaquette de coupe,
- un module de mesure d'efforts (1) comportant :
- un corps de mesure (2) réalisé dans ledit barreau de maintien (5) comprenant une âme centrale (10) délimitée par deux cavités (8, 9) séparant l'âme centrale (10) de part et d'autre de l'âme centrale (10), les cavités (8, 9) s'inscrivant dans une forme parallélépipédique définissant une première, deuxième et troisième direction (X, Y, Z) perpendiculaires entre elles, le corps de mesure (2) présentant une forme allongée dans la deuxième direction (Y),
- au moins une première jauge de contrainte (13) fixée sur un côté de l'âme centrale (10) et configurée pour mesurer une déformation en cisaillement dans la troisième direction (Z),
- au moins une deuxième jauge de contrainte (14) fixée sur une paroi latérale d'une des cavités (8, 9) et configurée pour mesurer une déformation en élongation-compression ou cisaillement dans la première direction (X),
**caractérisé en ce que** l'âme centrale (10) est également délimitée par au moins deux trous de découplage (11, 12, 16, 17, 18) conformés pour découpler les déformations du corps de mesure (2) autour des jauges de contraintes (13, 14), au moins entre la troisième direction (Z) et la première direction (X) et **en ce que** l'épaisseur (d) de l'âme centrale (10) est comprise entre 5 et 20mm.

2. Porte-plaquette (6) selon la revendication 1, **caractérisé en ce que** deux trous de découplage (11, 12) traversant le corps de mesure délimitent également l'âme centrale (10), l'âme centrale (10) présentant une forme de « I », la poutre du « I » étant orientée dans la deuxième direction (Y) du corps de mesure (2).

3. Porte-plaquette (6) selon la revendication 1, **caractérisé en ce que** trois trous de découplage (11, 12, 16) traversant le corps de mesure délimitent également l'âme centrale (10), l'âme centrale (10) présentant une forme en « T », le pied du « T » étant orienté dans la deuxième direction (Y) du corps de mesure (2).

4. Porte-plaquette (6) selon l'une des revendications précédentes, **caractérisé en ce qu'**il comporte au moins une troisième jauge de contrainte (15) fixée sur l'âme centrale (10) et configurée pour mesurer une déformation en élongation-compression dans la deuxième direction (Y).

5. Porte-plaquette (6) selon la revendication 1, **caractérisé en ce que** deux trous de découplage (17, 18) borgnes agencés symétriquement dos à dos par rapport à un plan de symétrie (X, Y) perpendiculaire au plan de symétrie (Z, Y) des deux cavités (8, 9) agencées dos à dos, délimitent également l'âme centrale (10).

6. Porte-plaquette (6) selon la revendication 5, **caractérisé en ce que** les trous de découplage (17, 18) présentent une forme allongée s'étendant dans la deuxième direction (Y) du corps de mesure (2).

7. Porte-plaquette (6) selon l'une des revendications 5 ou 6, **caractérisé en ce qu'**il comporte au moins une troisième jauge de contrainte (15) fixée sur un fond plat d'un trou de découplage (17, 18) et configurée pour mesurer une déformation en élongation-compression.

8. Porte-plaquette (6) selon la revendication 7, **caractérisé en ce qu'**il comporte une troisième jauge de contrainte (15) dans chacun des deux trous de découplage (17, 18).

9. Porte-plaquette (6) selon l'une des revendications précédentes, **caractérisé en ce qu'**il comporte une première jauge de contrainte (13) fixée de chaque côté de l'âme centrale (10), les jauges de contraintes (13) étant superposées de part et d'autre de l'âme centrale (10) et câblées en pont complet de Wheatstone.

10. Porte-plaquette (6) selon l'une des revendications précédentes, **caractérisé en ce que** les premières jauges de contrainte (13) sont des jauges doubles dites « chevron » ou « sapin ».

11. Porte-plaquette (6) selon l'une des revendications précédentes, **caractérisé en ce que** le corps de mesure (2) s'inscrit dans une forme générale parallélépipédique rectangle ou autre forme prismatique ou de forme cylindrique ou tronconique.

## Patentansprüche

1. Klemmhalter (6) für eine Werkzeugmaschine, umfassend:
- eine Haltestange (5), die konfiguriert ist, um in einem Werkzeugbewegungsmittel (4) montiert zu werden,
- einen Kopf (7), der die Haltestange (5) verlängert und dazu konfiguriert ist, einen Schneideinsatz zu tragen,
- ein Kraftmessmodul (1), umfassend:
- einen Messkörper (2), der in der Haltestange (5) ausgeführt ist und einen Mittelsteg (10) umfasst, der durch zwei Hohlräume (8, 9) begrenzt ist, die den Mittelsteg (10) auf beiden Seiten des Mittelstegs (10) trennen, wobei die Hohlräume (8, 9), die eine Parallelepipedform bilden, eine erste, zweite und dritte Richtung (X, Y, Z) senkrecht zueinander definieren, wobei der Messkörper (2) eine längliche Form in der zweiten Richtung (Y) aufweist,
- mindestens einen ersten Dehnungsmessstreifen (13), der auf einer Seite des Mittelstegs (10) befestigt und konfiguriert ist, um eine Scherverformung in der dritten Richtung (Z) zu messen,
- mindestens einen zweiten Dehnungsmessstreifen (14), der an einer Seitenwand eines der Hohlräume (8, 9) befestigt und konfiguriert ist, um eine Dehnungs-Druck- oder Scherverformung in der ersten Richtung (X) zu messen,
**dadurch gekennzeichnet, dass** der Mittelsteg (10) auch von mindestens zwei Entkopplungsbohrungen (11, 12, 16, 17, 18) begrenzt ist, die ausgebildet sind, um die Verformungen des Messkörpers (2) um die Dehnungsmessstreifen (13, 14) herum zumindest zwischen der dritten Richtung (Z) und der ersten Richtung (X) zu entkoppeln, und dadurch, dass die Dicke (d) des Mittelstegs (10) zwischen 5 und 20 mm liegt.

2. Klemmhalter (6) nach Anspruch 1, **dadurch gekennzeichnet, dass** zwei den Messkörper durchquerende Entkopplungsbohrungen (11, 12) auch den Mittelsteg (10) begrenzen, wobei der Mittelsteg (10) eine "I"-Form aufweist, wobei der Balken des "I" in die zweite Richtung (Y) des Messkörpers (2) ausgerichtet ist.

3. Klemmhalter (6) nach Anspruch 1, **dadurch gekennzeichnet, dass** drei den Messkörper durchquerende Entkopplungsbohrungen (11, 12, 16) auch den Mittelsteg (10) begrenzen, wobei der Mittelsteg (10) eine "T"-Form aufweist, wobei der Fuß des "T" in die zweite Richtung (Y) des Messkörpers (2) ausgerichtet ist.

4. Klemmhalter (6) nach einem der vorhergehenden Ansprüche, **dadurch gekennzeichnet, dass** er mindestens einen dritten Dehnungsmessstreifen (15) umfasst, der an dem Mittelsteg (10) befestigt und konfiguriert ist, um eine Dehnungs-Druck-Verformung in der zweiten Richtung (Y) zu messen.

5. Klemmhalter (6) nach Anspruch 1, **dadurch gekennzeichnet, dass** zwei Entkopplungsbohrungen (17, 18), die symmetrisch Rücken an Rücken in Bezug auf eine Symmetrieebene (X, Y) angeordnet sind, die senkrecht zur Symmetrieebene (Z, Y) der beiden Rücken an Rücken angeordneten Hohlräume (8, 9) angeordnet sind, auch den Mittelsteg (10) begrenzen.

6. Klemmhalter (6) nach Anspruch 5, **dadurch gekennzeichnet, dass** die Entkopplungsbohrungen (17, 18) eine längliche Form aufweisen, die sich in der zweiten Richtung (Y) des Messkörpers (2) erstreckt.

7. Klemmhalter (6) nach einem der Ansprüche 5 oder 6, **dadurch gekennzeichnet, dass** er mindestens einen dritten Dehnungsmessstreifen (15) umfasst, der an einem flachen Boden einer Entkopplungsbohrung (17, 18) befestigt und konfiguriert ist, um eine Dehnungs-Druck-Verformung zu messen.

8. Klemmhalter (6) nach Anspruch 7, **dadurch gekennzeichnet, dass** er in jeder der beiden Entkopplungsbohrungen (17, 18) einen dritten Dehnungsmessstreifen (15) umfasst.

9. Klemmhalter (6) nach einem der vorhergehenden Ansprüche, **dadurch gekennzeichnet, dass** er einen ersten Dehnungsmessstreifen (13) umfasst, der auf jeder Seite des Mittelstegs (10) befestigt ist, wobei die Dehnungsmessstreifen (13) auf beiden Seiten des Mittelstegs (10) übereinander liegen und als Wheatstone-Vollbrücke verdrahtet sind.

10. Klemmhalter (6) nach einem der vorhergehenden Ansprüche, **dadurch gekennzeichnet, dass** die ersten Dehnungsmessstreifen (13) sogenannte "Fischgrat"- oder "Baum"-Doppelmessstreifen sind.

11. Klemmhalter (6) nach einem der vorhergehenden Ansprüche, **dadurch gekennzeichnet, dass** der Messkörper (2) in einer im Allgemeinen rechteckigen Parallelepipedform oder einer anderen prismatischen Form oder von zylindrischer oder kegelstumpfförmiger Form ausgebildet ist.

## Claims

1. An insert holder (6) for a machine tool comprising:
- a holding bar (5) configured to be mounted in tool moving means (4),
- a head (7) extending the holding bar (5), configured to carry a cutting insert,
- a force measurement module (1) including:
- a measurement body (2) produced in said holding bar (5) comprising a central core (10) delimited by two cavities (8, 9) separating the central core (10) on either side of the central core (10), the cavities (8, 9) having a parallelepiped shape defining first, second and third directions (X, Y, Z) perpendicular to each other, the measurement body (2) having an elongated shape in the second direction (Y),
- at least one first strain gauge (13) fastened on a side of the central core (10) and configured to measure a shear deformation in the third direction (Z),
- at least one second strain gauge (14) fastened on a lateral wall of one of the cavities (8, 9) and configured to measure an elongation-compression or shear deformation in the first direction (X),
**characterised in that** the central core (10) is also delimited by at least two decoupling holes (11, 12, 16, 17, 18) shaped to decouple the deformations of the measurement body (2) around the strain gauges (13, 14), at least between the third direction (Z) and the first direction (X) and **in that** the thickness (d) of the central core (10) is comprised between 5 and 20mm.

2. The insert holder (6) according to claim 1, **characterised in that** two decoupling holes (11, 12) passing through the measurement body also delimit the central core (10), the central core (10) having an "I", the beam of the "I" being oriented in the second direction (Y) of the measurement body (2).

3. The insert holder (6) according to claim 1, **characterised in that** three decoupling holes (11, 12, 16) passing through the measurement body also delimit the central core (10), the central core (10) having a "T" shape, the foot of the "T" being oriented in the second direction (Y) of the measurement body (2).

4. The insert holder (6) according to one of the preceding claims, **characterised in that** it includes at least one third strain gauge (15) fastened on the central core (10) and configured to measure an elongation-compression deformation in the second direction (Y).

5. The insert holder (6) according to claim 1, **characterised in that** two blind decoupling holes (17, 18) arranged symmetrically back to back relative to a plane of symmetry (X, Y) perpendicular to the plane of symmetry (Z, Y) of the two cavities (8, 9) arranged back to back, also delimit the central core (10).

6. The insert holder (6) according to claim 5, **characterised in that** the decoupling holes (17, 18) have an elongated shape extending in the second direction (Y) of the measurement body (2).

7. The insert holder (6) according to one of claims 5 or 6, **characterised in that** it includes at least one third strain gauge (15) fastened on a flat bottom of a decoupling hole (17, 18) and configured to measure an elongation-compression deformation.

8. The insert holder (6) according to claim 7, **characterised in that** it includes a third strain gauge (15) in each of the two decoupling holes (17, 18).

9. The insert holder (6) according to one of the preceding claims, **characterised in that** it includes a first strain gauge (13) fastened on each side of the central core (10), the strain gauges (13) being superimposed on either side of the central core (10) and connected up to form a Wheatstone full bridge.

10. The insert holder (6) according to one of the preceding claims, **characterised in that** the first strain gauges (13) are dual gauges called "chevron" or "tree" gauges.

11. The insert holder (6) according to one of the preceding claims, **characterised in that** the measurement body (2) has a generally rectangular parallelepiped shape or other prismatic shape or of cylindrical or frusto-conical shape.
